# EUROPEAN PATENT SPECIFICATION

(11) **EP 4 627 479 B1**
(45) Date of publication and mention of the grant of the patent: **19.08.2026**
(21) Application number: 23812978.7
(22) Date of filing: 28.11.2023
(51) Int. Cl.: G06K 19/077

(54) **POOR ANTENNA POSITIONING DETECTION**
ERKENNUNG EINER SCHLECHTEN ANTENNENPOSITIONIERUNG
DÉTECTION DE MAUVAIS POSITIONNEMENT D'ANTENNE

(30) Priority: 29.11.2022 EP 22306752
(43) Date of publication of application: 08.10.2025
(73) Proprietor: THALES DIS FRANCE SAS, 92190 Meudon (FR)
(72) Inventor: ALLOT, Francis, 13705 La Ciotat (FR); MERIDIANO, Jean-Luc, 13705 La Ciotat (FR); SEBAN, Frédérick, 13705 La Ciotat (FR)
(74) Representative: Quintero Romero, Manuel
(86) International application number: PCT/EP2023/083422
(87) International publication number: WO 2024/115514

(56) References cited:
- US-A1- 2008 072 423
- US-A1- 2008 283 615
- US-A1- 2014 091 149

## Description

### TECHNICAL FIELD

The present disclosure generally relates to antenna patterns on a processed card. More particularly, but not exclusively, the present disclosure relates to detection of misalignment of antenna patterns during processing of cards. The present disclosure also relates to a corresponding manufacturing process of said card.

### BACKGROUND

Credit cards, identity cards and many forms of physical media require both mass-production and end-user personalization. For example, identity cards may need to be produced for very large population pools, yet every individual card has to uniquely identify the person carrying the card. The high-volume manufacturing phase may be performed on relatively expensive equipment because the equipment cost may be amortized over very large production runs. On the other hand, the end-user personalization may be preferably carried out at customer locations in relatively low volumes, thus, requiring much lower equipment costs.

For many identity cards, security of all information on the card, whether digitally recorded or physical features of the card, is of paramount importance. The security is sometimes tied to some features that reveal whether the media has physically been tampered with. One mechanism for thwarting attempts to tamper with identity cards is lamination. By securing the physical media in a lamination layer that may not be delaminated without destroying the physical pristineness of the media goes very far to protect the security integrity of media.

Other processes in manufacturing a smart card can further include printing, overprinting, laser etching, punching, and milling to name a few. A critical step with many of these cards involves printing an antenna pattern on a layer of a card. A misalignment of the printed antenna on such a card can cause catastrophic failures in the functionality of the card or with at least the wireless functions or aspects of the card. Such failures can create loss that can be preventable or at least curtailed.

US2014/091149A1 relates to dual interface smart cards with both contactless and contact interfaces.

US20080072423A1 relates to secure high frequency /ultra-high frequency inlay, and method and apparatus for making the inlay.

In this context, an objective of the present embodiments is to overcome at least in part the aforementioned drawbacks, while also being able to lead to other advantages.

### SUMMARY

The invention is defined by the independent claims.

Preferred embodiments are set out in the dependent claims.

In some embodiments, a media card manufactured with a cutting process can include a core layer, an antenna pattern on the core layer, and one or more bump out-areas of the antenna pattern having a threshold distance towards a process boundary, where the card passes a continuity test if the cutting process fails to create an open circuit at the bump-out area.

In some embodiments, the one or more bump-out areas of the antenna pattern are located on an upper periphery of the card. In some embodiments, the one or more bump-out areas of the antenna pattern are located on a lower periphery of the card. In yet other embodiments, the one or more bump-out areas of the antenna pattern are located on an upper and lower periphery of the card. In yet other embodiments, the one or more bump-out areas of the antenna pattern are located on a left and a right periphery of the card.

In some embodiments, the one or more bump-out areas of the antenna pattern are located on vertical and horizontal peripheries of the card. In some embodiments, the one or more bump-out areas of the antenna pattern are located on an upper and lower periphery of a milled aperture of the card.

In yet some other embodiments, the one or more bump-out areas of the antenna pattern are located on vertical and horizontal peripheries of the personalized media card and on an upper and lower periphery of a milled area of the personalized media card.

In some embodiments, the antenna area pattern printed on the core layer is shifted up or down over the threshold distance if the continuity test fails for the one or more bump-out areas of the antenna pattern located on vertical or peripheries of the card or on the upper and lower periphery of a milled aperture.

In some embodiments, the antenna area pattern printed on the core layer is shifted left or right over the threshold distance if the continuity test fails for the one or more bump-out areas of the antenna pattern located on horizontal peripheries of the card

In some embodiments, the threshold distance is a borderline distance of an embossing area to detect and avoid overprinting of the embossing area over the antenna area pattern printed on the core layer.

In some embodiments, the threshold distance is a borderline distance of a security feature to detect and avoid overprinting of a security feature area over the antenna area pattern on the core layer.

In some embodiments, a card having processed areas includes a core layer, an antenna pattern on the core layer, and one or more bump out-areas of the antenna pattern having a threshold distance towards a process boundary, where the card passes a continuity test if a punching or a milling process of the card manufacturing fails to create an open circuit at the bump-out areas.

In some embodiments, the card fails a continuity test if the punching or the milling processes creates the open circuit at the bump-out areas.

In some embodiments, the one or more bump-out areas of the antenna pattern are located on an upper periphery or a lower periphery of the card. In some embodiments, the one or more bump-out areas of the antenna pattern are located on an upper and lower periphery of the card. In some embodiments, one or more bump-out areas of the antenna pattern are located on a left and a right periphery of the card.

In some embodiments, one or more bump-out areas of the antenna pattern are located on an upper and lower periphery of a milled area of the card.

In some embodiments, one or more bump-out areas of the antenna pattern are located on vertical and horizontal peripheries of the card and on an upper and lower periphery of a milled area of the and where the antenna area pattern on the core layer is shifted up or down over the threshold distance if the continuity test fails for the one or more bump-out areas of the antenna pattern located on vertical or horizontal peripheries of the card or on the upper and lower periphery of the milled area.

In some embodiments, a card having processed areas, includes a core layer, an antenna pattern on the core layer, and one or more bump out-areas of the antenna pattern having a threshold distance towards a process boundary, where the card is configured to pass a continuity test if a punching or a milling process fails to create an open circuit at the bump-out areas. In some embodiments, the card fails the continuity test if the punching or the milling process creates the open circuit at the bump-out area indicative of a misaligned antenna on the core layer.

In some embodiments, the card fails the continuity test if the cutting process creates an open circuit at the bump out area.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1A is an rear plan view of a prior art identity card that includes a conventional antenna that is aligned;
FIG. 1B illustrates a rear plan view of a prior art identity card that has a misaligned antenna that has an embossing area covering the antenna;
FIG. 2 illustrates a rear plan view of an identity card having vertical and horizontal bump out areas as part of the antenna pattern in accordance with the embodiments;
FIG. 3 illustrates a rear plan view of an identity card having vertical bump out areas as part of the antenna pattern in accordance with the embodiments; and
FIG. 4 illustrates a rear plan view of an identity card having horizontal bump out areas as part of the antenna pattern in accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

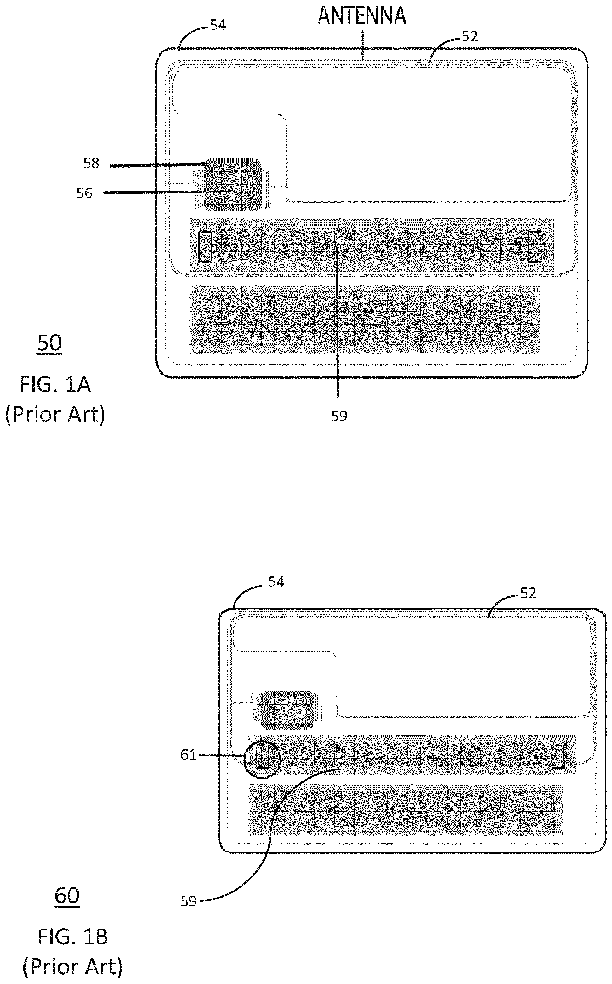

FIG. 1A is an rear plan view of a prior art identity card **50** that allows some level of personalization of the physical appearance of the card post-issuance, e.g., by the customer. Such a card **50** may, for example, have the following elements:
a transparent or opaque polycarbonate (PC) layer **54** having an antenna pattern **52** formed on the surface of the layer 54; the layer 54 can be formed in a credit card shape by being punched out from a larger sheet or layer of plastic or polycarbonate;
a milled out area 58 on or within the layer 54;
a wireless chip 56 placed within the milled out area 58;
one or more embossing areas **59** where signature panels, holograms or other materials may be embossed onto the layer 54.

With this arrangement, several issues can arise if there exists a misalignment between the antenna patterns 52 and other elements or processes. For example, during the embossing step, it is generally too late to detect that an antenna shifted relative to the card body with an excessive deviation due to process printing, collating, lamination or card punching. In such case as shown on the card 60 of FIG. 1B, a personalization center during the embossing step will emboss cards on top of wire antenna as shown in area 61 of FIG. 1B, and will destroy the product or diminish the functionality of the cards for the owner. Such event will have a cost impact and increase the risk of card return from the field. It portrays or suggests poor quality control for the card manufacturer and the bank and creates reputational risk that banks and card manufacturers wish to avoid.

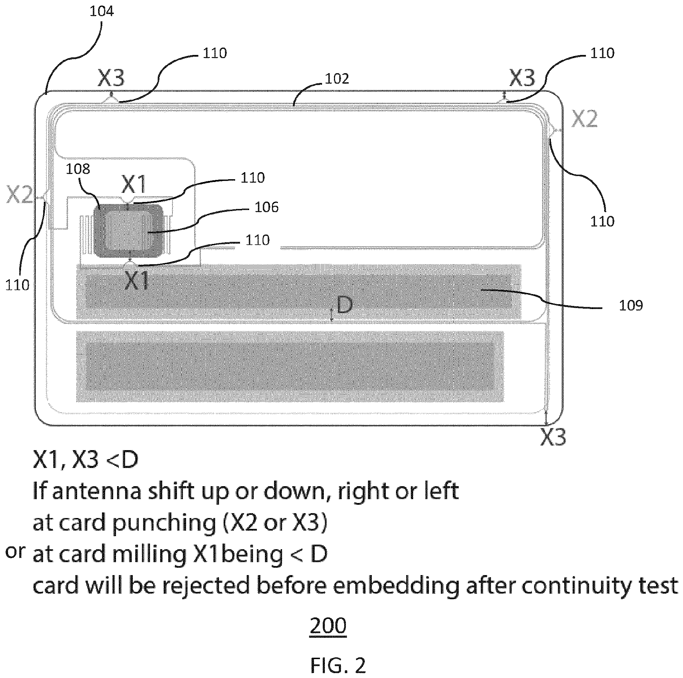

In some embodiments in order to avoid some of the detriments noted above as illustrated in the card 200 of FIG. 2, a card manufactured with a cutting process (such as punching or milling or other suitable processing techniques) can include a core layer 104, an antenna pattern 102 on the core layer 104, and one or more bump-out areas 110 of the antenna pattern having a threshold distance "D" towards a process boundary (such as the periphery of the punched out core layer 104 of the card 200 or the periphery of the milled out area 108), where the card passes a continuity test if the cutting or punching or milling or other process fails to create an open circuit at the bump-out area. Note that the antenna pattern can be formed on the core layer by printing, etching, wire embedding, or by other suitable pattern forming techniques. The bump-out areas can be similarly formed.

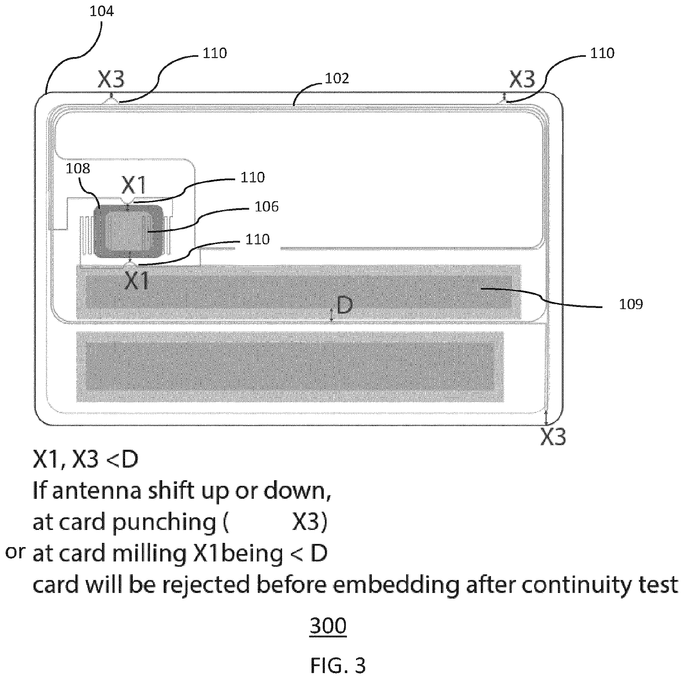

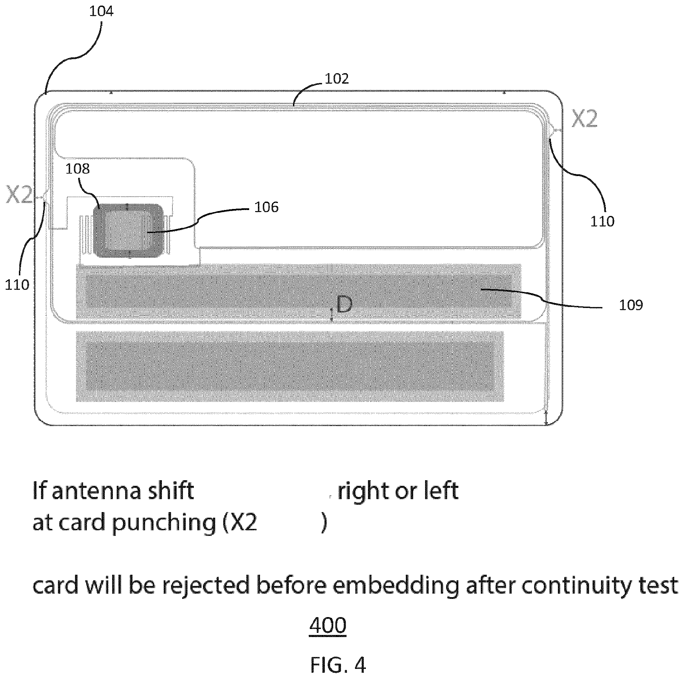

In some embodiments, the one or more bump-out areas 110 of the antenna pattern 102 are located on an upper periphery (see X3) of the card 300 of FIG. 3 and card 200 of FIG. 2. In some embodiments, the one or more bump-out areas 110 of the antenna pattern are located on a lower periphery of the card. In yet other embodiments, the one or more bump-out areas 110 of the antenna pattern are located on an upper and lower periphery of the card, again as shown in FIGs. 2 and 3. In yet other embodiments, the one or more bump-out areas 110 of the antenna pattern are located on a left and a right periphery (see X2) of the card as shown in the card 400 of FIG. 4 (as well as FIG. 2).

In some embodiments, the one or more bump-out areas 110 of the antenna pattern are located on vertical and horizontal peripheries (see X3 and X2 respectively) of the personalized media card as shown in FIG. 2. In some embodiments, the one or more bump-out areas 110 of the antenna pattern 102 are located on an upper and lower periphery (see X1) of a milled area 108 of the card 200 of FIG. 2 or card 300 of FIG. 3.

In yet some other embodiments, the one or more bump-out areas 110 of the antenna pattern 102 are located on vertical and horizontal peripheries (see X3 and X2) of the card and on an upper and lower periphery (see X1) of a milled area 108 of the card 200 as shown in FIG. 2.

In some embodiments, the antenna area pattern printed on the core layer is shifted up or down over the threshold distance if the continuity test fails for the one or more bump-out areas of the antenna pattern located on vertical or peripheries of the card or on the upper and lower periphery of the milled aperture.

In some embodiments, the antenna area pattern printed on the core layer is shifted left or right over the threshold distance if the continuity test fails for the one or more bump-out areas of the antenna pattern located on horizontal peripheries of the card

In some embodiments, the threshold distance is a borderline distance "D" of an embossing area 109 to detect and avoid overprinting of the embossing area over the antenna area pattern 102 printed on the core layer 104. Note that the embossing area can be a security feature and as such, in some embodiments the threshold distance can be a borderline distance of a security feature to detect and avoid overprinting of a security feature area over the antenna area pattern on the core layer. In general, the bump-out areas or dents 110 are created on the embedded antenna patterns 102 at either an edge of the card or layer (104) or around a module cavity or clear window that is typically milled. In some embodiments, the threshold distance "D" can range from 0.5 mm to 3 mm, so that the antenna printing process will have an adequate threshold range to deviate from its ideal positioning and yet still yet pass the continuity test and further ensure other unhampered functionality from other processes or elements in manufacturing the card.

There are several advantages to having the bump-out areas 110 and performing a continuity test before performing several additional process steps including the additional steps of module or wireless chip embedding and card personalization. By determining if a discontinuity exists before module embedding or card personalization (embossing, etc.), defective cards can be eliminated from the field eliminating cards that would have been non-functional or limited in functionality and also saving costs of wasted wireless chips among other cost savings in terms of field returns.

In some embodiments, again referring to FIG. 2, a card 200 having processed areas or boundaries (104, 108) includes a core layer 104, an antenna pattern 102 fromed on the core layer 104, and one or more bump out-areas 110 of the antenna pattern 102 having a threshold distance "D" towards a process boundary, where the card passes a continuity test if a punching or a milling process of the card 200 fails to create an open circuit at the bump-out areas 110.

In some embodiments, the card 200 fails a continuity test if the punching or the milling processes creates the open circuit at the bump-out areas 110.

In some embodiments, the one or more bump-out areas 110 of the antenna pattern 102 are located on an upper periphery **or** a lower periphery (see X3) of the card. In some embodiments, the one or more bump-out areas 110 of the antenna pattern 102 are located on an upper **and** lower periphery (again, see X3 at upper and lower peripheries) of the card 200. In some embodiments, one or more bump-out areas 110 of the antenna pattern 102 are located on a left and a right periphery (see X2) of the card.

In some embodiments, one or more bump-out areas 110 of the antenna pattern 102 are located on an upper and lower periphery (see X1) of a milled area 108 of the card 200 or of card 300 of FIG. 3.

In some embodiments, one or more bump-out areas 110 of the antenna pattern 102 are located on vertical and horizontal peripheries (see X3 and X2) of the card 200 and on an upper and lower periphery (see X1) of a milled area 108 of the card and where the antenna area pattern 102 printed on the core layer is shifted up or down over the threshold distance if the continuity test fails for the one or more bump-out areas 110 of the antenna pattern 102 located on vertical or horizontal peripheries of the card 200 or on the upper and lower periphery of the milled area 108.

In some embodiments, a card (200, 300, or 400) having processed areas (104 and/or 108), includes a core layer 104, an antenna pattern 102 printed on the core layer, and one or more bump out-areas 110 of the antenna pattern 102 having a threshold distance "D" towards a process boundary, where the card is configured to pass a continuity test if a punching or a milling process fails to create an open circuit at the bump-out areas 110. In some embodiments, the card fails the continuity test if the punching or the milling process creates the open circuit at the bump-out area 110 indicative of a misaligned antenna formed on the core layer 104.

It is indicated in FIG.2 that X1, X3 < D. It is also stated in FIG.2 that if antenna shift up or down, right or left at card punching (X2 or X3) or at card milling X1 being < D, card will be rejected before embedding after continuity test. It is indicated in FIG. 3 that X1, X3 < D. It is also stated in FIG.3 that if antenna shift up or down, at card punching (X3) or at card milling X1 being < D, card will be rejected before embedding after continuity test. It is indicated in FIG. 4 that if antenna shift right or left at card punching (X2), card will be rejected before embedding after continuity test.

## Claims

1. A card (200, 300, 400) comprising:
a core layer (104); and
an antenna pattern (102) formed on the core layer (104), wherein the antenna pattern (102) comprises one or more bump out-areas (110), each bump out-areas (110) having a threshold distance towards a process boundary, wherein each bump out-areas (110) comprises a deviation of the antenna pattern (102) towards the process boundary,
wherein the card is configured to pass a continuity test if a cutting process at the process boundary fails to create an open circuit at the bump-out area (110), and
**characterized in that**
the continuity test is performed on the card (200, 300, 400) to determine if a discontinuity exists in the card (200, 300, 400) before a wireless chip embedding or a card personalization and, thereby the card (200, 300, 400) is identified as a defective card if the discontinuity exists in the card (200, 300, 400).

2. A card (200) according to claim 1, wherein the card is manufactured with the cutting process and wherein the card passes a continuity test if the cutting process fails to create an open circuit at the bump-out area (110).

3. The card (200) of claim 1, wherein the one or more bump-out areas (110) of the antenna pattern (102) are located on an upper periphery of the card (200).

4. The card (200) of claim 1, one or more bump-out areas (110) of the antenna pattern (102) are located on a lower periphery of the card (200).

5. The card (200) of claim 1, one or more bump-out areas (110) of the antenna pattern (102) are located on an upper and lower periphery of the card (200).

6. The card (200) of claim 1, one or more bump-out areas (110) of the antenna pattern (102) are located on a left and a right periphery of the card (200).

7. The card (200) of claim 1, one or more bump-out areas (110) of the antenna pattern (102) are located on vertical and horizontal peripheries of the card (200).

8. The card (200) of claim 1, one or more bump-out areas (110) of the antenna pattern (102) are located on an upper and lower periphery of a milled aperture of the card (200).

9. The card (200) of claim 1, one or more bump-out areas (110) of the antenna pattern (102) are located on vertical and horizontal peripheries of the card (200) and on an upper and lower periphery of a milled area (108) of the card.

10. The card (200) of claim 9, wherein the antenna area pattern (102) on the core layer (104) is shifted up or down over the threshold distance if the continuity test fails for the one or more bump-out areas (110) of the antenna pattern (102) located on vertical or peripheries of the card (200) or on the upper and lower periphery of the milled aperture.

11. The card (200) of claim 9, wherein the antenna area pattern (102) on the core layer (104) is shifted left or right over the threshold distance if the continuity test fails for the one or more bump-out areas (110) of the antenna pattern (102) located on horizontal peripheries of the card (200).

12. The card (300) according to claim 1, wherein the card has processed areas and wherein the card passes a continuity test if a punching or a milling process fails to create an open circuit at the bump-out areas (110).

13. The card (300) of claim 12, wherein the card fails a continuity test if the punching or the milling processes creates the open circuit at the bump-out areas (110).

14. The card (300) of claim 12, wherein the one or more bump-out areas (110) of the antenna pattern (102) are located on an upper periphery or a lower periphery of the card (300) or on the upper periphery and the lower periphery of the card (300).

15. The card (300) of claim 12, wherein one or more bump-out areas (110) of the antenna pattern (102) are located on a left and a right periphery of the card (300).

16. The card (300) of claim 12, wherein one or more bump-out areas (110) of the antenna pattern (102) are located on an upper and lower periphery of a milled area of the card (300).

17. The card (300) of claim 12, wherein one or more bump-out areas (110) of the antenna pattern (102) are located on vertical and horizontal peripheries of the card (300) and on an upper and lower periphery of a milled area (108) of the card (300) and wherein the antenna area pattern (102) on the core layer (104) is shifted up or down over the threshold distance if the continuity test fails for the one or more bump-out areas (110) of the antenna pattern (102) located on vertical or horizontal peripheries of the card (300) or on the upper and lower periphery of the milled area (108).

18. The card (200, 300, 400) according to any of preceding claims, wherein the threshold distance is a borderline distance of an embossing area (109) to detect and avoid overprinting of the embossing area (109) over the antenna area pattern (102) on the core layer (104).

19. The card (200, 300, 400) according to any of preceding claims, wherein the threshold distance is a borderline distance of a security feature to detect and avoid overprinting of a security feature area over the antenna area pattern (102) on the core layer (104).

20. The card (400) according to claim 1, wherein the card (400) has processed areas and wherein the card (400) is configured to pass a continuity test if a punching or a milling process fails to create an open circuit at the bump-out areas (110).

21. The card (400) of claim 20, wherein the card (400) fails the continuity test if the punching or the milling process creates the open circuit at the bump-out area (110) indicative of a misaligned antenna on the core layer (104).

22. A method of forming a card (200, 300, 400), said method comprising:
- providing a core layer (104),
- providing an antenna pattern (102) formed on the core layer (104), and
- providing one or more bump out-areas (110) of the antenna pattern (102) having a threshold distance towards a process boundary, wherein the antenna pattern (102) comprises the one or more bump out-areas (110), and wherein each bump out-areas (110) comprises a deviation of the antenna pattern (102) towards the process boundary, wherein the method comprises a step of continuity test consisting of a cutting process for forming at least part of the card (200, 300, 400), said continuity test being considered as passed or positive if said cutting process fails to create an open circuit at the bump-out area (110), and
**characterized in that**
the continuity test is performed on the card (200, 300, 400) to determine if a discontinuity exists in the card (200, 300, 400) before a wireless chip embedding or a card personalization and, thereby the card (200, 300, 400) is identified as a defective card if the discontinuity exists in the card (200, 300, 400).

23. A method according to claim 22, wherein the card (200, 300, 400) fails the continuity test if the cutting process creates an open circuit at the bump-out area (110).

## Patentansprüche

1. Karte (200, 300, 400), umfassend:
eine Kernschicht (104); und
ein auf der Kernschicht (104) ausgebildetes Antennenmuster (102), wobei das Antennenmuster (102) einen oder mehrere Vorsprungsbereiche (110) umfasst, wobei jeder Vorsprungsbereich (110) einen Schwellenabstand zu einer Prozessgrenze aufweist, wobei jeder Vorsprungsbereich (110) eine Auslenkung des Antennenmusters (102) in Richtung der Prozessgrenze umfasst, wobei die Karte so ausgelegt ist, dass sie eine Durchgangsprüfung besteht, wenn ein Schneidvorgang entlang der Prozessgrenze im Vorsprungsbereich (110) keinen offenen Stromkreis erzeugt, und
**dadurch gekennzeichnet, dass**
die Durchgangsprüfung an der Karte (200, 300, 400) durchgeführt wird, um zu bestimmen, ob vor dem Einbetten eines Wireless-Chips oder vor einer Kartenpersonalisierung eine Unterbrechung in der Karte (200, 300, 400) vorliegt, und dadurch die Karte (200, 300, 400) als eine fehlerhafte Karte identifiziert wird, wenn die Unterbrechung in der Karte (200, 300, 400) vorliegt.

2. Karte (200) nach Anspruch 1, wobei die Karte mit dem Schneidprozess hergestellt wird und wobei die Karte eine Durchgangsprüfung besteht, wenn der Schneidprozess keinen offenen Stromkreis an dem Vorsprungsbereich (110) erzeugt.

3. Karte (200) nach Anspruch 1, wobei der eine oder die mehreren Vorsprungsbereiche (110) des Antennenmusters (102) an einem oberen Randbereich der Karte (200) angeordnet sind.

4. Karte (200) nach Anspruch 1, wobei der eine oder die mehreren Vorsprungsbereiche (110) des Antennenmusters (102) an einem unteren Randbereich der Karte (200) angeordnet sind.

5. Karte (200) nach Anspruch 1, wobei der eine oder die mehreren Vorsprungsbereiche (110) des Antennenmusters (102) an einem oberen und einem unteren Randbereich der Karte (200) angeordnet sind.

6. Karte (200) nach Anspruch 1, wobei der eine oder die mehreren Vorsprungsbereiche (110) des Antennenmusters (102) an einem linken und einem rechten Randbereich der Karte (200) angeordnet sind.

7. Karte (200) nach Anspruch 1, wobei der eine oder die mehreren Vorsprungsbereiche (110) des Antennenmusters (102) an vertikalen und horizontalen Randbereichen der Karte (200) angeordnet sind.

8. Karte (200) nach Anspruch 1, wobei der eine oder die mehreren Vorsprungsbereiche (110) des Antennenmusters (102) an einem oberen und einem unteren Randbereich einer ausgefrästen Aussparung der Karte (200) angeordnet sind.

9. Karte (200) nach Anspruch 1, wobei der eine oder die mehreren Vorsprungsbereiche (110) des Antennenmusters (102) an vertikalen und horizontalen Randbereichen der Karte (200) sowie am oberen und unteren Randbereich eines ausgefrästen Bereichs (108) der Karte angeordnet sind.

10. Karte (200) nach Anspruch 9, wobei das Antennenmuster (102) auf der Kernschicht (104) um den Schwellenabstand nach oben oder nach unten verschoben wird, wenn die Durchgangsprüfung für den einen oder die mehreren an den vertikalen Randbereichen der Karte (200) oder am oberen und unteren Randbereich der ausgefrästen Aussparung angeordneten Vorsprungsbereiche (110) des Antennenmusters (102) fehlschlägt.

11. Karte (200) nach Anspruch 9, wobei das Antennenmuster (102) auf der Kernschicht (104) um den Schwellenabstand nach links oder nach rechts verschoben wird, wenn die Durchgangsprüfung für den einen oder die mehreren an den horizontalen Randbereichen der Karte (200) angeordneten Vorsprungsbereiche (110) des Antennenmusters (102) fehlschlägt.

12. Karte (300) nach Anspruch 1, wobei die Karte bearbeitete Bereiche aufweist und die Karte eine Durchgangsprüfung besteht, wenn ein Stanz- oder Fräsvorgang an den Vorsprungsbereichen (110) keine Unterbrechung des Stromkreises verursacht.

13. Karte (300) nach Anspruch 12, wobei die Karte die Durchgangsprüfung nicht besteht, wenn der Stanz- oder der Fräsvorgang an den Vorsprungsbereichen (110) eine Unterbrechung des Stromkreises verursacht.

14. Karte (300) nach Anspruch 12, wobei der eine oder die mehreren Vorsprungsbereiche (110) des Antennenmusters (102) an einem oberen Randbereich oder einem unteren Randbereich der Karte (300) oder sowohl am oberen als auch am unteren Randbereich der Karte (300) angeordnet sind.

15. Karte (300) nach Anspruch 12, wobei ein oder mehrere Vorsprungsbereiche (110) des Antennenmusters (102) an einem linken und einem rechten Randbereich der Karte (300) angeordnet sind.

16. Karte (300) nach Anspruch 12, wobei ein oder mehrere Vorsprungsbereiche (110) des Antennenmusters (102) an einem oberen und einem unteren Randbereich eines ausgefrästen Bereichs der Karte (300) angeordnet sind.

17. Karte (300) nach Anspruch 12, wobei ein oder mehrere Vorsprungsbereiche (110) des Antennenmusters (102) an vertikalen und horizontalen Randbereichen der Karte (300) sowie an einem oberen und einem unteren Randbereich eines ausgefrästen Bereichs (108) der Karte (300) angeordnet sind, und wobei das Antennenmuster (102) auf der Kernschicht (104) um den Schwellenabstand nach oben oder nach unten verschoben wird, wenn die Durchgangsprüfung für den einen oder die mehreren an vertikalen oder horizontalen Randbereichen der Karte (300) oder am oberen und unteren Randbereich des ausgefrästen Bereichs (108) angeordneten Vorsprungsbereiche (110) des Antennenmusters (102) fehlschlägt.

18. Karte (200, 300, 400) nach einem der vorstehenden Ansprüche, wobei der Schwellenabstand den Grenzabstand eines Prägebereichs (109) darstellt, um ein Überprägen des Prägebereichs (109) über das Antennenmuster (102) auf der Kernschicht (104) zu erkennen und zu vermeiden.

19. Karte (200, 300, 400) nach einem der vorstehenden Ansprüche, wobei der Schwellenabstand den Grenzabstand eines Sicherheitsmerkmals darstellt, um ein Überprägen eines Bereichs des Sicherheitsmerkmals über das Antennenmuster (102) auf der Kernschicht (104) zu erkennen und zu vermeiden.

20. Karte (400) nach Anspruch 1, wobei die Karte (400) bearbeitete Bereiche aufweist und
wobei die Karte (400) konfiguriert ist, um eine Durchgangsprüfung zu bestehen, wenn ein Stanz- oder ein Fräsvorgang keinen offenen Stromkreis an den Vorsprungsbereichen (110) erzeugt.

21. Karte (400) nach Anspruch 20, wobei die Karte (400) die Durchgangsprüfung nicht besteht, wenn der Stanz- oder der Fräsvorgang an dem Vorsprungsbereich (110) eine Unterbrechung des Stromkreises verursacht, die auf eine fehlausgerichtete Antenne auf der Kernschicht (104) hinweist.

22. Verfahren zum Herstellen einer Karte (200, 300, 400), das Verfahren umfassend:
- Bereitstellen einer Kernschicht (104),
- Bereitstellen einer Antennenstruktur (102), die auf der Kernschicht (104) ausgebildet ist, und
- Bereitstellen eines oder mehrerer Vorsprungsbereiche (110) des Antennenmusters (102), die einen Schwellenabstand zu einer Prozessgrenze aufweisen, wobei das Antennenmuster (102) den einen oder die mehreren Vorsprungsbereiche (110) umfasst und wobei jeder Vorsprungsbereich (110) eine Auslenkung des Antennenmusters (102) in Richtung der Prozessgrenze umfasst, wobei das Verfahren einen Schritt der Durchgangsprüfung umfasst, der einen Schneidvorgang zur Herstellung mindestens eines Teils der Karte (200, 300, 400) umfasst, wobei die Durchgangsprüfung als bestanden oder positiv angesehen wird, wenn der Schneidvorgang keine Unterbrechung des Stromkreises am Vorsprungsbereich (110) verursacht, und
**dadurch gekennzeichnet, dass**
die Durchgangsprüfung an der Karte (200, 300, 400) durchgeführt wird, um zu bestimmen, ob vor dem Einbetten eines Wireless-Chips oder vor einer Kartenpersonalisierung eine Unterbrechung in der Karte (200, 300, 400) vorliegt, und dadurch die Karte (200, 300, 400) als eine fehlerhafte Karte identifiziert wird, wenn die Unterbrechung in der Karte (200, 300, 400) vorliegt.

23. Verfahren nach Anspruch 22, wobei die Karte (200, 300, 400) die Durchgangsprüfung nicht besteht, wenn der Schneidvorgang an dem Vorsprungsbereich (110) eine Unterbrechung des Stromkreises verursacht.

## Revendications

1. Carte (200, 300, 400) comprenant :
une couche centrale (104) ; et
un motif d'antenne (102) formé sur la couche centrale (104), dans laquelle le motif d'antenne (102) comprend une ou des zones de bosse (110), chaque zone de bosse (110) ayant une distance seuil vers une limite de processus, dans laquelle chaque zone de bosse (110) comprend une déviation du motif d'antenne (102) vers la limite de processus, dans laquelle la carte est configurée pour réussir un test de continuité si un processus de découpe à la limite de processus ne parvient pas à créer un circuit ouvert au niveau de la zone de bosse (110), et
**caractérisée en ce que**
le test de continuité est réalisé sur la carte (200, 300, 400) pour déterminer si une discontinuité existe dans la carte (200, 300, 400) avant une intégration d'une puce sans fil ou une personnalisation de carte et, de ce fait, la carte (200, 300, 400) est identifiée comme une carte défectueuse si la discontinuité existe dans la carte (200, 300, 400).

2. Carte (200) selon la revendication 1, dans laquelle la carte est fabriquée avec le processus de découpe et dans laquelle la carte passe un test de continuité si le processus de découpe ne parvient pas à créer un circuit ouvert au niveau de la zone de bosse (110).

3. Carte (200) selon la revendication 1, dans laquelle la ou les zones de bosse (110) du motif d'antenne (102) sont situées sur une périphérie supérieure de la carte (200).

4. Carte (200) selon la revendication 1, une ou des zones de bosse (110) du motif d'antenne (102) sont situées sur une périphérie inférieure de la carte (200).

5. Carte (200) selon la revendication 1, une ou des zones de bosse (110) du motif d'antenne (102) sont situées sur une périphérie supérieure et inférieure de la carte (200).

6. Carte (200) selon la revendication 1, une ou des zones de bosse (110) du motif d'antenne (102) sont situées sur une périphérie gauche et une périphérie droite de la carte (200).

7. Carte (200) selon la revendication 1, une ou des zones de bosse (110) du motif d'antenne (102) sont situées sur des périphéries verticales et horizontales de la carte (200).

8. Carte (200) selon la revendication 1, une ou des zones de bosse (110) du motif d'antenne (102) sont situées sur une périphérie supérieure et inférieure d'une ouverture fraisée de la carte (200).

9. Carte (200) selon la revendication 1, une ou des zones de bosse(110) du motif d'antenne (102) sont situées sur des périphéries verticales et horizontales de la carte (200) et sur une périphérie supérieure et inférieure d'une zone fraisée (108) de la carte.

10. Carte (200) selon la revendication 9, dans laquelle le motif de zone d'antenne (102) sur la couche centrale (104) est décalé vers le haut ou vers le bas sur la distance seuil si le test de continuité échoue pour la ou les zones de bosse (110) du motif d'antenne (102) situées sur la verticale ou les périphéries de la carte (200) ou sur les périphéries supérieure et inférieure de l'ouverture fraisée.

11. Carte (200) selon la revendication 9, dans laquelle le diagramme de zone d'antenne (102) sur la couche centrale (104) est décalé vers la gauche ou la droite sur la distance seuil si le test de continuité échoue pour la ou les zones de bosse (110) du motif d'antenne (102) situées sur des périphéries horizontales de la carte (200).

12. Carte (300) selon la revendication 1, dans laquelle la carte a des zones traitées et dans laquelle la carte passe un test de continuité si un processus de poinçonnage ou de fraisage ne parvient pas à créer un circuit ouvert au niveau des zones de bosse (110).

13. Carte (300) selon la revendication 12, dans laquelle la carte échoue à un test de continuité si les processus de poinçonnage ou de fraisage créent le circuit ouvert au niveau des zones de bosse (110).

14. Carte (300) selon la revendication 12, dans laquelle la ou les zones de bosse (110) du motif d'antenne (102) sont situées sur une périphérie supérieure ou une périphérie inférieure de la carte (300) ou sur la périphérie supérieure et la périphérie inférieure de la carte (300).

15. Carte (300) selon la revendication 12, dans laquelle une ou des zones de bosse (110) du motif d'antenne (102) sont situées sur une périphérie gauche et une périphérie droite de la carte (300).

16. Carte (300) selon la revendication 12, dans laquelle une ou des zones de bosse (110) du motif d'antenne (102) sont situées sur une périphérie supérieure et inférieure d'une zone fraisée de la carte (300).

17. Carte (300) selon la revendication 12, dans laquelle une ou des zones de bosse (110) du motif d'antenne (102) sont situées sur des périphéries verticales et horizontales de la carte (300) et sur une périphérie supérieure et inférieure d'une zone fraisée (108) de la carte (300) et dans laquelle le motif de zone d'antenne (102) sur la couche centrale (104) est décalé vers le haut ou vers le bas sur la distance seuil si le test de continuité échoue pour la ou les zones de bosse (110) du motif d'antenne (102) situées sur des périphéries verticales ou horizontales de la carte (300) ou sur des périphéries supérieure et inférieure de la zone fraisée (108).

18. Carte (200, 300, 400) selon l'une quelconque des revendications précédentes, dans laquelle la distance seuil est une distance limite d'une zone de gaufrage (109) pour détecter et éviter la surimpression de la zone de gaufrage (109) sur le motif de zone d'antenne (102) sur la couche centrale (104).

19. Carte (200, 300, 400) selon l'une quelconque des revendications précédentes, dans laquelle la distance seuil est une distance limite d'une fonction sécurité pour détecter et éviter la surimpression d'une zone de fonction sécurité sur le motif de zone d'antenne (102) sur la couche centrale (104).

20. Carte (400) selon la revendication 1, dans laquelle la carte (400) a des zones traitées et
dans laquelle la carte (400) est configurée pour réussir un test de continuité si un processus de poinçonnage ou de fraisage ne parvient pas à créer un circuit ouvert au niveau des zones de bosse (110).

21. Carte (400) selon la revendication 20, dans laquelle la carte (400) échoue au test de continuité si le processus de poinçonnage ou de fraisage crée le circuit ouvert au niveau de la zone de bosse (110) indiquant une antenne mal alignée sur la couche centrale (104).

22. Procédé de formation d'une carte (200, 300, 400), ledit procédé comprenant :
- la fourniture d'une couche centrale (104),
- la fourniture d'un motif d'antenne (102) formé sur la couche centrale (104), et
- la fourniture d'une ou des zones de bosse (110) du motif d'antenne (102) ayant une distance seuil vers une limite de processus, dans laquelle le motif d'antenne (102) comprend la ou les zones de bosse (110), et dans lequel chaque zone de bosse (110) comprend une déviation du motif d'antenne (102) vers la limite de processus, dans lequel le procédé comprend une étape de test de continuité consistant en un processus de découpe pour former au moins une partie de la carte (200, 300, 400), ledit test de continuité étant considéré comme réussi ou positif si ledit processus de découpe ne parvient pas à créer un circuit ouvert au niveau de la zone de bosse (110), et
**caractérisé en ce que**
le test de continuité est réalisé sur la carte (200, 300, 400) pour déterminer si une discontinuité existe dans la carte (200, 300, 400) avant une intégration d'une puce sans fil ou une personnalisation de carte et, de ce fait, la carte (200, 300, 400) est identifiée comme une carte défectueuse si la discontinuité existe dans la carte (200, 300, 400).

23. Procédé selon la revendication 22, dans lequel la carte (200, 300, 400) échoue au test de continuité si le processus de découpe crée un circuit ouvert au niveau de la zone de bosse (110).
